# EUROPÄISCHE PATENTSCHRIFT

(11) **EP 1 925 175 B1**
(45) Veröffentlichungstag und Bekanntmachung des Hinweises auf die Patenterteilung: **17.08.2011**
(21) Anmeldenummer: 06778354.8
(22) Anmeldetag: 24.08.2006
(51) Int. Cl.: H04W 36/14

(54) **TELEKOMMUNIKATIONSSYSTEM UND VERFAHREN ZUM STEUERN EINES WECHSELS EINES TEILNEHMERENDGERÄTES ZWISCHEN ZWEI NETZWERKEN**
TELECOMMUNICATION SYSTEM AND METHOD FOR CONTROLLING SWITCHING OF A USER TERMINAL BETWEEN TWO NETWORKS
SYSTEME DE TELECOMMUNICATION, ET PROCEDE POUR COMMANDER UN ECHANGE DE TERMINAL D'ABONNE ENTRE DEUX RESEAUX

(30) Priorität: 12.09.2005 DE 102005043364
(43) Veröffentlichungstag der Anmeldung: 28.05.2008
(73) Patentinhaber: SIEMENS AKTIENGESELLSCHAFT, 80333 München (DE)
(72) Erfinder: BÜCKER, Wolfgang, 85579 Neubiberg (DE); GRÖTING, Wolfgang, 46149 Oberhausen (DE); HORN, Günther, 81541 München (DE); KROSS, Joachim, 81377 München (DE); RIEGEL, Maximilian, 90409 Nürnberg (DE)
(86) Internationale Anmeldenummer: PCT/EP2006/065632
(87) Internationale Veröffentlichungsnummer: WO 2007/031389

(56) Entgegenhaltungen:
- WO-A2-2004/006447
- US-A1- 2004 013 116
- US-A1- 2005 068 929
- CAPPIELLO M ET AL: "Mobility amongst heterogeneous networks with AAA support" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, Bd. VOL. 1 OF 5, 28. April 2002 (2002-04-28), Seiten 2064-2069, XP010589849 ISBN: 0-7803-7400-2
- SALKINTZIS A K: "WLAN/3G interworking architectures for next generation hybrid data networks" COMMUNICATIONS, 2004 IEEE INTERNATIONAL CONFERENCE ON PARIS, FRANCE 20-24 JUNE 2004, PISCATAWAY, NJ, USA,IEEE, 20. Juni 2004 (2004-06-20), Seiten 3984-3988, XP010709862 ISBN: 0-7803-8533-0

## Beschreibung

Die Erfindung betrifft ein Telekommunikationssystem, das ein erstes Netzwerk und ein zweites Netzwerk aufweist, und ein Verfahren zum Steuern eines Wechsels eines Teilnehmerendgerätes zwischen dem ersten Netzwerk und dem zweiten Netzwerk.

In der heutigen Zeit nimmt die Verbreitung von zellularen Mobilfunknetzwerken, insbesondere der 3. Generation, d. h. vor allem nach dem so genannten Universal Mobile Telecommunications System, UMTS, Standard, immer weiter zu. Gleichzeitig werden weitere Funknetzwerke entwickelt, die darauf abzielen, Teilnehmern große Bandbreiten zur Verfügung zu stellen, um große Datenmengen in kurzer Zeit übertragen zu können. Ein solches Funknetzwerk wird seit einiger Zeit von einer Vielzahl von Interessierten geplant, die sich in einem so genannten WiMAX, Worldwide Interoperability for Microwave Access, Forum (www.wimaxforum.org) zusammengeschlossen haben, um einen Standard für ein WiMAX Funknetzwerk zu erstellen. Es ist beabsichtigt, dass Teilnehmerendgeräte, wie z.B. Mobilfunktelefone oder Notebooks, sowohl auf herkömmliche Mobilfunknetzwerke, wie das UMTS Netzwerk, als auch auf das WiMAX Funknetzwerk Zugriff haben sollen. Teilnehmer können dadurch das für sie am besten geeignete Netzwerk nach bestimmten Kriterien, wie z. B. Verfügbarkeit, Preis, Qualität, etc., auswählen und bei Bedarf zwischen zwei verschiedenen Netzwerken wechseln.

Bei einem Wechsel zwischen zwei Netzwerken kann es zu Datenverlusten und/oder Verbindungsunterbrechungen kommen, was vermieden werden sollte. Zu diesem Zweck wird ein derartiger Wechsel zwischen zwei verschiedenen Netzwerken durch ein Mobilitätsprotokoll unterstützt. Aufgabe des Mobilitätsprotokolls ist es, bestehende Kommunikationsverbindungen eines Teilnehmers bei einem Wechsel des Netzwerkes aufrechtzuerhalten und dabei Unterbrechungen zu vermeiden oder zumindest zu minimieren.

Ein solches Mobilitätsprotokoll wurde beispielsweise von dem WiMAX Forum vor allem auf der Grundlage des so genannten Mobile IP Protokolls, insbesondere des Mobile IP Protokolls Version 4, MIPv4, der Internet Engineering Task Force, IETF, festgelegt. Das WiMAX Forum hat zwei unterschiedliche Varianten der Nutzung von Mobile IP definiert. Zum einen wird ein sogenannter Client Mobile IP, CMIP, client definiert, der direkt in dem Teilnehmerendgerät installiert ist und die Signalisierung für den Wechsel zwischen den zwei Netzwerken über das Teilnehmerendgerät abwickelt. Zum anderen wird ein sogenannter Proxy Mobile IP, PMIP, client definiert, der in dem Netzwerk installiert ist und bezüglich des Wechsels zwischen den Netzwerken einen Stellvertreter für das Teilnehmerendgerät in dem Netzwerk darstellt. Der PMIP wickelt für das Teilnehmerendgerät die Signalisierung für den Wechsel zwischen den Netzwerken ab. In diesem Fall nimmt das Teilnehmerendgerät die Anwendung des Mobilitätsprotokolls in dem Netzwerk weitgehend nicht wahr.

In diesem Rahmen beschreibt das Dokument WO 2004/006447 ein Telekommunikationssystem mit einem zellularen Mobilfunknetzwerk und einem drahtlosen LAN, W-LAN. Ein mobiles Teilnehmerendgerät soll zwischen beiden Netzwerken störungsfrei wechseln können. Das Telekommunikationssystem enthält einen AAA Client, der sowohl für das zellulare Mobilfunknetzwerk als auch für das drahtlose LAN dient. Dabei kann die Authentisierung mit dem DIAMETER Protokoll über einen AAA-client (AAAh, AAAf) erfolgen.

Der vorliegenden Erfindung liegt die Aufgabe zugrunde, einen weitgehend problemlosen Wechsel zwischen einem zellularen Mobilfunknetzwerk und einem so genannten WiMAX Funknetzwerk zu gewährleisten.

Erfindungsgemäß wird diese Aufgabe durch ein Telekommunikationssystem mit den Merkmalen des Anspruchs 1 und ein Verfahren zum Steuern eines Wechsels eines Teilnehmerendgerätes zwischen einem zellularen Mobilfunknetzwerk und einem WiMAX Funknetzwerk mit den Merkmalen des Anspruchs 10 gelöst.

Vorrichtungsseitig enthält das erfindungsgemäße Telekömmunikationssystem ein erstes Netzwerk, das ein zellulares Mobilfunknetzwerk ist, ein zweites Netzwerk, das ein so genanntes WiMAX, Worldwide Interoperability for Microwave Access, Funknetzwerk ist, und einen so genannten AAA, Authentication,

Authorization and Accounting, -Server zum Abspeichern von Teilnehmerdaten eines Teilnehmerendgerätes. Das Teilnehmerendgerät ist sowohl zum Benutzen des ersten Netzwerkes als auch des zweiten Netzwerkes ausgestaltet. Der AAA-Server ist in dem Telekommunikationssystem so angeordnet, dass sowohl seitens des ersten Netzwerkes als auch seitens des zweiten Netzwerkes auf in dem AAA-Server abgespeicherte Teilnehmerdaten des Teilnehmerendgerätes zugreifbar ist.

Verfahrensseitig wird ein Wechsels eines Teilnehmerendgerätes zwischen einem ersten Netzwerk, das ein zellulares Mobilfunknetzwerk ist, und einem zweiten Netzwerk, das ein so genanntes WiMAX, Worldwide Interoperability for Microwave Access, Funknetzwerk ist, gesteuert. Dabei werden Teilnehmerdaten des Teilnehmerendgerätes, dem sowohl ein Zugang zu dem ersten Netzwerk als auch zu dem zweiten Netzwerk möglich ist, in einem so genannten AAA, Authentication, Authorization and Accounting, -Server abgespeichert. Auf in dem AAA-Server abgespeicherte Teilnehmerdaten des Teilnehmerendgerätes wird sowohl seitens des ersten Netzwerkes als auch seitens des zweiten Netzwerkes zugegriffen.

Aufgrund der vorliegende Erfindung kann vorteilhafterweise ein nahtloser Übergang zwischen dem zellularen Mobilfunknetzwerk und dem WiMAX Funknetzwerk ermöglicht werden, so dass eine Unterbrechung einer bereits bestehenden Verbindung vollständig oder nahezu verhindert werden kann. Dies gewährleistet eine besonders hohe Effizienz und eine hohe Qualität beim Wechsel des Netzwerkes. Des Weiteren kann eine AAA-Infrastruktur, die beiden Netzwerken gemeinsam ist, auf einfache Weise dazu genutzt werden, den Wechsel durchzuführen. Der bereits in Zusammenhang mit WiMAX definierte AAA-Server kann vorteilhafterweise erfindungsgemäß so ausgestaltet werden, dass er einen Zugriff aus beiden Netzwerken zulässt.

Gemäß einer bevorzugten Weiterbildung der Erfindung ist das Telekommunikationssystem so ausgestaltet, dass es bei einem Aufbau einer Verbindung zwischen dem Teilnehmerendgerät und dem ersten Netzwerk oder dem zweiten Netzwerk überprüft, ob das Teilnehmerendgerät bereits mit dem jeweils anderen Netzwerk verbunden ist. Ist dies der Fall, werden die Teilnehmerdaten des Teilnehmerendgerätes aus dem AAA-Server abgerufen. Auf technisch einfache Weise können für den Aufbau einer Verbindung über eines der beiden Netzwerke bereits in dem AAA-Server vorhandene Teilnehmerdaten aus der Verbindung über das andere Netzwerk genutzt werden. Dies vereinfacht die Signalisierung bei einem Wechsel zwischen den beiden Netzwerken. Darüber hinaus wird gewährleistet, dass die für den Aufbau der neuen Verbindung erforderlichen Teilnehmerdaten zumindest teilweise die gleichen sind, die bereits für den Aufbau der bereits bestehenden Verbindung verwendet worden sind. Dies trägt zu einem problemlosen Wechsel des Netzwerkes bei.

Besonders bevorzugt ist das Telekommunikationssystem so ausgestaltet, dass es beim Aufbau der Verbindung erzeugte Teilnehmerdaten in dem AAA-Server abspeichert, falls das Teilnehmerendgerät nicht bereits mit dem jeweils anderen Netzwerk verbunden ist. In diesem Fall können die beim neuen Aufbau der Verbindung im AAA-Server abgespeicherten Teilnehmerdaten für einen nachfolgenden Wechsel zu dem anderen der Netzwerke verwendet werden. Dazu kann dann beim Wechsel auf die im AAA-Server bereits abgespeicherten Teilnehmerdaten zugegriffen und ein unterbrechungsfreier Wechsel durchgeführt werden.

In einer weiteren, besonders bevorzugten Ausgestaltung der Erfindung ist für den Wechsel des Teilnehmerendgerätes zwischen dem ersten Netzwerk und dem zweiten Netzwerk ein Mobilitätsprotokoll implementiert. Dieses Mobilitätsprotokoll unterstützt einen sicheren Wechsel und gewährleistet, dass die an der Signalisierung des Wechsels beteiligten Komponenten des Telekommunikationssystemes den Wechsel vollziehen können. Das Mobilitätsprotokoll ist insbesondere das so genannte Mobile IP Mobilitätsprotokoll. Das Teilnehmerendgerät kann damit bei dem Wechsel in ein anderes Netzwerk seine IP-Adresse beibehalten.

Besonders vorteilhaft ist in dem Mobilitätsprotokoll ein Mobil-Client für das Teilnehmerendgerät definiert, der zum Signalisieren mittels des Teilnehmerendgerätes beim Durchführen des Wechsels des Teilnehmerendgerätes zwischen den Netzwerken ausgestaltet ist. Dadurch kann ein entsprechend ausgestattetes Teilnehmerendgerät die Signalisierung selbstständig durchführen. Dies vereinfacht die Signalisierung und hält deren Aufwand niedrig. Der Mobil-Client ist insbesondere ein sogenannter Client Mobile IP, CMIP, client des Mobile IP Mobilitätsprotokolles.

Gemäß einer bevorzugten Weiterbildung der Erfindung ist in dem Mobilitätsprotokoll ein Proxy Mobil-Client definiert, der als Stellvertreter für das Teilnehmerendgerät zum Ausführen eines Signalisierens beim Durchführen des Wechsels des Teilnehmerendgerätes zwischen den Netzwerken ausgestaltet ist. Damit kann auch für ein Teilnehmerendgerät, das nicht mit einem geeigneten Mobil-Client ausgestattet ist, problemlos ein Wechsel des Netzwerkes erfolgen. Der Proxy Mobil-Client ist insbesondere ein sogenannter Proxy Mobile IP, PMIP, client des Mobile IP Mobilitätsprotokolles.

Vorteilhafterweise ist ein solcher Proxy Mobil-Client in dem ersten Netzwerk implementiert. Dadurch ist das zellulare Mobilfunknetzwerk an die Signalisierung mittels eines Stellvertreters für das Teilnehmerendgerät auf der Grundlage des Mobilitätsprotokolles angepasst. Auf besonders einfache Weise kann das zellulare Mobilfunknetzwerk somit den Wechsel durchführen und vorteilhafterweise auf den AAA-Server zugreifen und dieser wiederum ebenfalls Daten an das zellulare Mobilfunknetzwerk übermitteln.

Gemäß einer weiteren, bevorzugten Weiterbildung der Erfindung sind in dem Mobilitätsprotokoll ein sogenannter Heimagent, HA, für ein dem Teilnehmerendgerät zugeordnetes Heimnetzwerk und ein sogenannter Fremdagent, FA, für ein von dem Teilnehmerendgerät benutzbares Fremdnetzwerk, das nicht sein Heimnetzwerk ist, definiert. Der Fremdagent, FA, ist dabei so ausgestaltet, dass er von dem Heimnetzwerk des Teilnehmerendgerätes kommende, an das Teilnehmerendgerät gerichtete Signalisierungs- und Nutzdaten empfängt. Der Heimagent, HA, kann insbesondere ein spezieller Rechner oder Router sein, der an das Heimnetzwerk des Teilnehmerendgerätes angeschlossen ist. Der Heimagent sendet vor allem im Heimnetz für das Teilnehmerendgerät ankommende Datenpakete an das Teilnehmerendgerät weiter, sofern sich dieses nicht im Heimnetzwerk befindet. Der Heimagent verwaltet des Weiteren die Standortinformationen des Teilnehmerendgerätes. Der Fremdagent, FA, kann ebenfalls ein spezieller Rechner oder Router sein, der an das Fremdnetzwerk angeschlossen ist, das nicht das Heimnetzwerk des Teilnehmerendgerätes ist. Der Fremdagent stellt für das im Bereich des Fremdnetzwerkes befindliche Teilnehmerendgerät Routing-Dienste zu dem Fremdnetz zur Verfügung. Insbesondere leitet der Fremdagent vom Heimagenten des Teilnehmerendgerätes übermittelte Datenpakete an das Teilnehmerendgerät weiter. Die Begriffe Heimnetzwerk und Fremdnetzwerk werden hier im Sinne der für das Mobilitätsprotokoll relevanten Terminologie verwendet.

Besonders bevorzugt ist in dem ersten Netzwerk ein solcher Fremdagent, FA, vorhanden, der dabei so ausgestaltet ist, dass er mobiliätsprotokollspezifische Signalisierungsdaten zwischen dem Proxy Mobil-Client und dem Heimagenten weiterleitet, während er eigentliche Teilnehmer-Nutzdaten zwischen dem Teilnehmerendgerät und dem Heimagenten weiterleitet. Auf diese technisch einfache Weise ist ein effektives Weiterleiten von Daten von und zu dem Teilnehmerendgerät möglich.

Gemäß einer weiteren, bevorzugten Weiterbildung der Erfindung enthält die in dem AAA-Server abspeicherbaren Teilnehmerdaten wenigstens eine, insbesondere alle, der folgenden Angaben: - Angaben, die für eine so genannte Mobile Security Association, MSA, für einen Schutz einer Übertragung von mobilitätsprotokollspezifischen Signalisierungsdaten zwischen dem Teilnehmerendgerät und dem Heimagenten benötigt werden, wie z. B. ein gemeinsamer Geheimschlüssel zum Erzeugen eines so genannten Message Authentication Codes, MAC, eine Angabe eines Algorithmus' zum Erzeugen des Message Authentication Codes, MAC, ein Wiedergabeschutz, etc., - eine Adresse des Heimagenten des Teilnehmerendgerätes und - eine Heimadresse des Teilnehmerendgerätes in seinem Heimnetzwerk. Mit einer oder mehreren, insbesondere allen, dieser Angaben kann ein problemloser Übergang zwischen den beiden Netzwerken effektiv gewährleistet werden.

Besonders bevorzugt ist das Telekommunikationssystem so ausgestaltet, dass es bei einem Wechsel des Teilnehmerendgerätes zwischen dem ersten Netzwerk und dem zweiten Netzwerke eine vor dem Wechsel bestehende Verbindung des Teilnehmerendgerätes zu einem der beiden Netzwerke, insbesondere für eine vorgebbare Dauer, aufrechterhält, nachdem die neue Verbindung des Teilnehmerendgerätes zu dem anderen der beiden Netzwerke aufgebaut wurde. Dadurch kann vorteilhafterweise gewährleistet werden, dass sich die neu aufgebaute Verbindung bewährt hat und funktioniert, bevor die "alte" Verbindung, die vor dem Aufbau der neuen Verbindung bereits bestand, aufgelöst wird. Bei Bedarf ist es des Weiteren einfach möglich, erneut auf die "alte" Verbindung zurück zu greifen und dadurch eine Rückfallposition zu haben.

Gemäß einer bevorzugten Weiterbildung der Erfindung ist das erste Netzwerk ein Netzwerk nach dem so genannten Universal Mobile Telecommunications System, UMTS, Standard. Die Kombination aus UMTS Netzwerk und WiMAX Netzwerk gibt dem Teilnehmer eine besonders große Bewegungsfreiheit und Komfortabilität.

Weitere vorteilhafte Ausgestaltungen und Weiterbildungen der Erfindung sind der Beschreibung unter Bezugnahme auf die Zeichnung entnehmbar.

Die Erfindung wird nachfolgend anhand der in den schematischen Figuren der Zeichnung angegebenen Ausführungsbeispiele näher erläutert. Es zeigen dabei:
Figur 1 ein erstes Ausführungsbeispiel eines erfindungsgemäßen Telekommunikationssystemes mit einem UMTS Netzwerk und einem WiMAX Netzwerk, die jeweils einen Proxy Mobile IP client eines Mobilitätsprotokolls aufweisen;
Figur 2 ein erstes Ablaufschema, in dem der zeitliche Signalisierungsablauf bei einem Aufbau einer Verbindung eines Teilnehmerendgerätes in das UMTS Netzwerk des Telekommunikationssystemes nach Fig. 1 dargestellt ist;
Figur 3 ein zweites Ablaufschema, in dem der zeitliche Signalisierungsablauf bei einem Aufbau einer Verbindung des Teilnehmerendgerätes in das WiMAX Netzwerk des Telekommunikationssystemes nach Fig. 1 dargestellt ist;
Figur 4 ein zweites Ausführungsbeispiel des erfindungsgemäβen Telekommunikationssystemes mit dem UMTS und dem WiMAX Netzwerk, wobei das Teilnehmerendgerät einen Client Mobile IP client des Mobilitätsprotokolls aufweist, und
Figur 5 ein drittes Ablaufschema, index der zeitliche Signalisierungsablauf bei einem Aufbau einer Verbindung des Teilnehmerendgerätes in das UMTS Netzwerk des Telekommunikationssystemes nach Fig. 4 dargestellt ist.

In den Figuren der Zeichnung sind gleiche bzw. funktionsgleiche Elemente und Signale - sofern nichts anderes angegeben ist - mit denselben Bezugszeichen versehen worden.

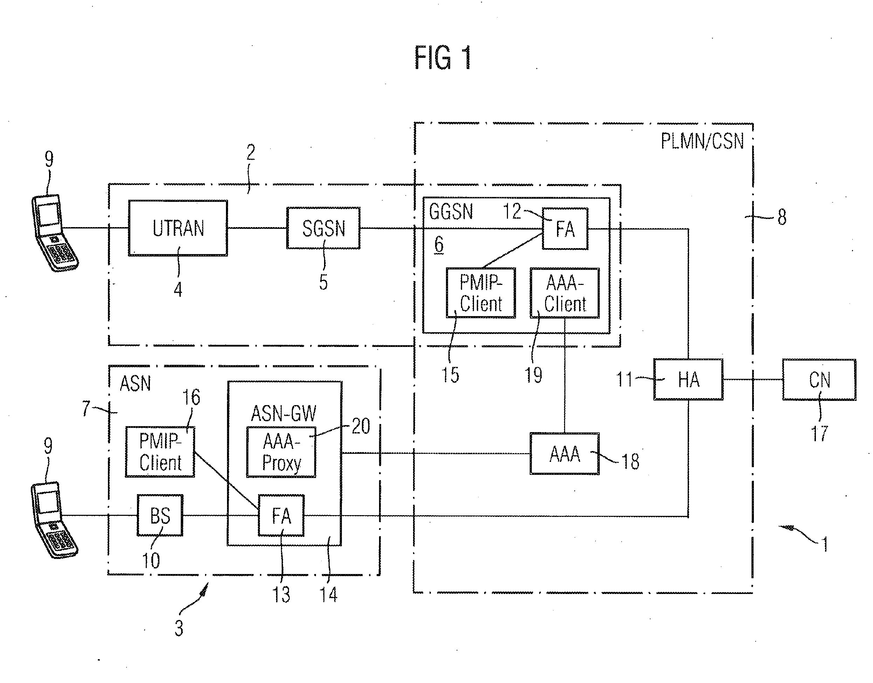

Die Fig. 1 zeigt ein erstes Ausführungsbeispiel eines erfindungsgemäßen Telekommunikationssystemes 1 mit einem ersten Netzwerk, das hier ein UMTS Netzwerk 2 ist, und einem zweiten Netzwerk, das ein WiMAX Netzwerk 3 ist. Das UMTS Netzwerk 2 weist ein so genanntes UMTS Terrestrial Radio Access Network, UTRAN, 4 auf, das als Zugangsnetzwerk des UMTS Netzwerkes 2 dient. Das UMTS Netzwerk 2 enthält des Weiteren einen so genannten Serving GPRS Support Node, SGSN, 5, der eine höhere Kontrolleinheit des UMTS Netzwerkes 2 darstellt und mit einem speziellen Netzwerkknoten, dem so genannten Gateway GPRS Support Node, GGSN, 6, verbunden ist. Das WiMAX Netzwerk 3 entspricht weitgehend dem von dem WiMAX Forum spezifierten Aufbau. Das WiMAX Netzwerk 3 enthält ein so genanntes Access Service Network, ASN, 7 und darüber hinaus ein so genanntes Connectivity Service Network, CSN. Das CSN des WiMAX Netzwerkes 3 ist im vorliegenden Ausführungsbeispiel zur Vereinfachung der Darstellung mit dem so genannten Public Land Mobile Network, PLMN, des UMTS Netzwerkes 2 zu einem gemeinsamen Netzwerk PLMN/CSN 8 zusammengefasst. Das PLMN und das CSN können aber ebenso getrennte Netzwerke sein. Insbesondere ist es möglich, dass sowohl das UMTS Netzwerk 2 als auch das WiMAX Netzwerk 3 den gleichen Betreiber haben.

Das Telekommunikationssystem 1 enthält des Weiteren eine Mobilstation 9, die ein Teilnehmerendgerät darstellt und hier ein Mobiltelefon ist. Die Mobilstation 9 hat sowohl einen Zugang zu dem UMTS Netzwerk 2 als auch zu dem WiMAX Netzwerk 3 und kann zwischen den beiden Netzwerken wechseln. Um dies zu verdeutlichen, ist die Mobilstation 9 in der Fig. 1 zweimal dargestellt. Zum einen ist sie an das UTRAN 4 des UMTS Netzwerkes 2 und zum anderen an eine im ASN 7 angeordnete Basisstation BS 10 des WiMAX Netzwerkes 3 angeschlossen. Für den Wechsel zwischen den beiden Netzwerken ist in dem Telekommunikationssystem 1 ein Mobilitätsprotokoll implementiert, das den Wechsel von einem der Netzwerke in das andere unterstützt. Das Mobilitätsprotokoll ist hier das so genannte Mobile IP, MIP, Protokoll. Das MIP definiert einen Heimagenten, HA, dem die Mobilstation 9 zugeordnet ist. Im vorliegenden Ausführungsbeispiel ist ein Heimagent HA 11 in dem gemeinsamen Netzwerk 8 angeordnet. Das MIP definiert des Weiteren einen Fremdagenten, FA. Im vorliegenden Fall ist ein erster Fremdagent FA 12 in dem GGSN 6 des UMTS Netzwerkes 2 angeordnet. Ein zweiter Fremdagent FA 13 ist in einem Gateway ASN-GW 14 des ASN 7 des WiMAX Netzwerkes 3 vorhanden. Der Heimagent HA 11 ist sowohl mit dem Fremdagenten FA 12 als auch mit dem Fremdagenten FA 13 verbunden. Der Fremdagent FA 12 ist darüber hinaus mit dem SGSN 5 und der Fremdagent FA 13 mit der Basisstation 10 verbunden.

In der durch das WiMAX Forum definierten Verwendung des Mobilitätsprotokolles ist ebenfalls ein Proxy Mobil-Client definiert, der zum Signalisieren beim Durchführen des Wechsels der Mobilstation 9 zwischen den beiden Netzwerken 2 und 3 ausgestaltet ist. Der Proxy Mobil-Client ist hier ein Proxy Mobile IP, PMIP, client des Mobilitätsprotokolles. Der PMIP dient als Stellvertreter für die Mobilstation 9, so dass diese hier das Mobilitätsprotokoll nicht installiert haben muss. Ein erster PMIP client 15 ist im UMTS Netzwerk 2 vorhanden. Im vorliegenden Ausführungsbeispiel ist der PMIP client 15 in dem GGSN 6 angeordnet. Dies ist aber nicht notwendigerweise so. Der PMIP client 15 kann auch getrennt von dem GGSN 6 in dem UMTS Netzwerk 2 angeordnet sein. In der Fig. 1 ist der PMIP client 15 mit dem Fremdagenten FA 12 verbunden. Ein zweiter PMIP client 16 ist für das WiMAX Netzwerk 3 in dem ASN 7 vorhanden. Der PMIP client 16 ist in der Fig. 1 mit dem Fremdagenten FA 13 verbunden. Der Heimagent HA 11 dient des Weiteren als Übergang zu weiteren Bereichen des Telekommunikationssystemes 1. Stellvertretend ist in der Fig. 1 ein sogenannter Correspondent Node, CN, 17 dargestellt, der z. B. ein Webserver im Internet sein kann.

In dem gemeinsamen Netzwerk PLMN/CSN 8 ist ein sogenannter Authentication, Authorization and Accounting, AAA, Server 18 angeordnet. Dieser AAA Server 18 unterstützt vor allem für das WiMAX Netzwerk 3 die Authentifizierung, Autorisierung und Berechtigung sowie die Vergebührung einer Übertragung von Kommunikationsdaten oder -nachrichten. Für eine Kommunikation mit dem AAA Server 18 sind in dem UMTS Netzwerk 2 in dem GGSN 6 ein AAA client 19 und in dem WiMAX Netzwerk 3 in dem ASN-GW. 14 ein AAA proxy 20 vorhanden. Der AAA Server 18 ist hier sowohl mit dem UMTS Netzwerk 2, und zwar mit dem AAA client 19, als auch mit dem WiMAX Netzwerk 3, und zwar mit dem AAA proxy 20, verbunden. Erfindungsgemäß kann sowohl von dem UMTS Netzwerk 2 als auch von dem WiMAX Netzwerk 3 auf den AAA Server 18 zugegriffen werden. Entsprechend können von dem AAA Server 18 Daten zu den beiden Netzwerken 2 und 3 übermittelt werden.

In dem AAA Server 18 können vor allem solche Daten abgespeichert und verwaltet werden, die der Mobilstation 9 zugeordnet sind und für einen Wechsel der Mobilstation 2 von dem UMTS Netzwerk 2 zu dem WiMAX Netzwerk 3, oder umgekehrt, erforderlich sind, um die notwendigen MIP Operationen und Signalisierungen durchführen zu können. Die zum Aufbau einer "neuen" Verbindung erforderlichen Angaben entsprechen weitgehend denen der "alten" Verbindung zu demjenigen Netzwerk, zu dem bereits eine Verbindung besteht. Aus der Sicht des Heimagenten HA 11 betrachtet, steckt hinter dem Wechsel zu einem anderen Netzwerk ein einfacher Wechsel einer so genannten care-of Adresse, CoA. Diese CoA entspricht der Adresse der Mobilstation 9 in einem der Fremdnetzwerke, d. h. derjenigen Adresse, unter der die Mobilstation 9, wenn sie sich in dem Fremdnetzwerk befindet, erreichbar ist. Ein solcher Wechsel der CoA kann bei der Signalisierung durch einen so genannten Registration Request durchgeführt werden. Die in dem AAA Server 18 für die Mobilstation 9 abgespeicherten Angaben, auf die im Falle eines Wechsels des Netzwerkes 2 oder 3 zugegriffen werden kann, sind hier insbesondere: - Angaben, MSA Daten, die für eine so genannte Mobile Security Association, MSA, für einen Schutz einer Übertragung von mobilitätsprotokollspezifischen Signalisierungsdaten zwischen der Mobilstation 9 und dem Heimagenten 11 benötigt werden, wie z. B. ein gemeinsamer Geheimschlüssel zum Erzeugen eines so genannten Message Authentication Codes, MAC, eine Angabe eines Algorithmus' zum Erzeugen des MAC, ein Wiedergabeschutz, etc., - eine Adresse HA@ des Heimagenten 11 der Mobilstation 9 und - eine Heimadresse HoA der Mobilstation 9 in ihrem Heimnetzwerk 8 (im WiMAX Standard wird diese Heimadresse mit Point of Attachment, PoA, bezeichnet). Diese Angaben werden bei dem ersten Einwählen der Mobilstation 9 in eines der beiden Netzwerke 2 oder 3 erzeugt und in einem speziellen Bereich des AAA Servers 18 abgespeichert. Im Falle des Wechsels des Netzwerkes 2 oder 3 können die Angaben dann abgefragt und abgerufen werden. Die Angaben werden dann zu dem PMIP client des "neuen" Netzwerkes 2 oder 3 übermittelt, so dass dieser die notwendigen MIP Operationen und Signalisierungen für das Durchführen des Wechsel ausführen kann. Im Falle des Wechsel bleiben hier die MSA Daten, die HA@ und die HoA gleich und nur die CoA wechselt.

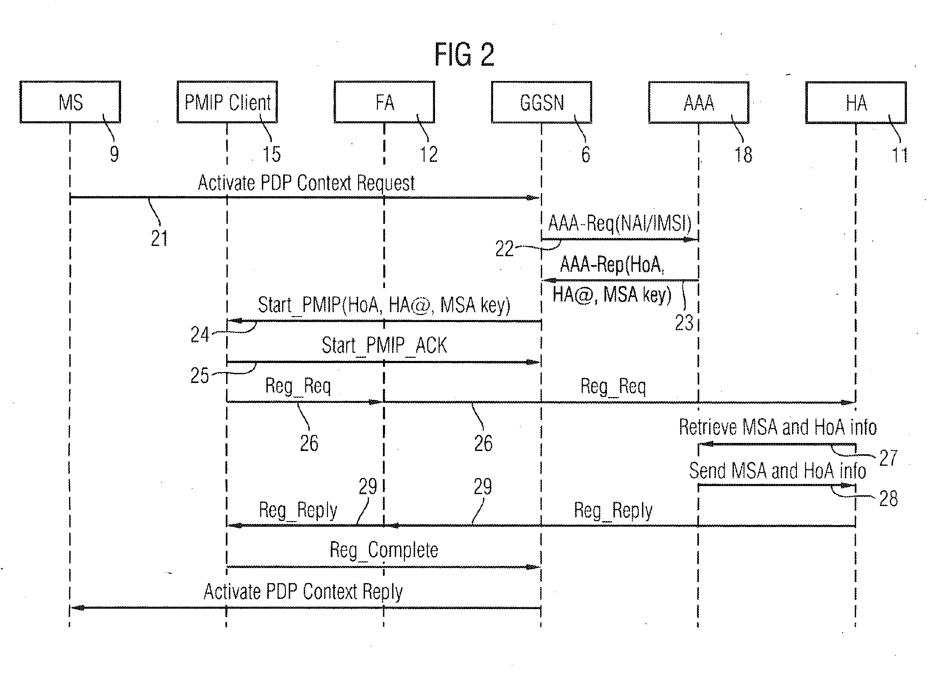

Die Fig. 2 zeigt ein erstes Ablaufschema, in dem der zeitliche Signalisierungsablauf bei einem Aufbau einer Verbindung der Mobilstation 9 in das UMTS Netzwerk 2 des Telekommunikationssystemes 1 nach Fig. 1 dargestellt ist. Zu Beginn authentifiziert sich die Mobilstation 9 über den SGSN 5 und ein so genanntes Home Location Register, HLR, mittels eines so genannten Authentication and Key Agreement, AKA, in einer herkömmlichen GPRS/UMTS PS Prozedur. Der SGSN 5 erhält dann das Teilnehmerprofil der Mobilstation 9 von dem HLR. Dieser Zugang zu dem UMTS Netzwerk 2 über den SGSN 5 ist hier nicht erfindungswesentlich und wird daher nicht weiter beschrieben und in der Fig. 2 nicht dargestellt. Die folgende Beschreibung einer so genannten Packet Data Protocol, PDP, context creation Prozedur anhand der Fig. 2 gilt sowohl für den Fall, dass die Mobilstation 9 eine "neue" Verbindung zu dem UMTS Netzwerk 2 herstellt, ohne zuvor bereits mit dem WiMAX Netzwerk 3 verbunden gewesen sein, als auch für den Fall, dass die Mobilstation 9 eine "neue" Verbindung zu dem UMTS Netzwerk 2 herstellt, während sie bereits mit dem WiMAX Netzwerk 3 verbunden ist.

In der Fig. 2 sind verschiedene an der Signalisierung beteiligte Komponenten des Telekommunikationssystemes 1 dargestellt. In einem ersten Schritt 21 sendet die Mobilstation 9 einen so genannten PDP Context Activation Request über den SGSN 5 zu dem GGSN 6. Dabei wird am GGSN 6 vorteilhafterweise ein Zugangspunkt, ein sogenannter Access Point Name, APN, ausgewählt, der ein Roaming zwischen dem WiMAX Netzwerk 3 und dem UMTS Netzwerk 2 unterstützt. Ein solcher APN muss dazu beispielsweise eine PMIP Funktionalität zur Verfügung stellen und es muss des Weiteren möglich sein, über ihn sowohl den Heimagenten HA 11 mittels einer MIP Signalisierung für einen Datentransport als auch den AAA Server 18 über die AAA Infrastruktur zu erreichen. Alternativ ist es auch möglich, dass in dem der Mobilstation 9 zugeordneten Teilnehmerprofil festgelegt ist, dass für die Mobilstation 9 nur dieser bestimmte APN mit der PMIP Funktionalität ausgewählt werden darf, und somit andere APN für den Wechsel nicht zur Verfügung stehen.

Nachdem der GGSN 6 den PDP Context Activation Request empfangen hat, sendet er in einem Schritt 22 einen so genannten AAA Request zu dem AAA Server 18. Dies erfolgt über den AAA client 19, der in dem GGSN 6 angeordnet ist. Der AAA Request kann einen so genannten Network Access Identifier, NAI, enthalten, der insbesondere von der Mobilstation 9zusammen mit einem Passwort geliefert werden kann, um noch eine zusätzliche Sicherheitsmaßnahme für den Zugriff auf Dienste des APN zur Verfügung zu stellen. Der AAA Request kann weiterhin eine so genannte International Mobile Subscriber Identity, IMSI, als eine Identifizierung für die Mobilstation 9 in dem UMTS Netzwerk 2 und/oder einen kanonischen NAI enthalten, der eine Identifikation für die Teilnehmerdaten in dem AAA Server 18 darstellt. Ein solcher NAI ist insbesondere in der Spezifikation 3GPP TS 29.061: "3rd Generation Partnership Project; Technical Specification Group Core Network and Terminals; Interworking between the Public Land Mobile Network (PLMN) supporting packet based services and Packet Data Networks (PDN); Release 6"; Sektion 16, beschrieben. Das Ableiten einer kanonischen NAI aus der IMSI ist insbesondere in der Spezifikation 3GPP TS 23.003: "3rd Generation Partnership Project; Technical Specification Group Core Network and Terminals; Numbering, addressing and identification; Release 6", beschrieben. Für weitergehende Informationen wird daher auf diese Spezifikationen verwiesen. Aufgrund der im Schritt 22 übermittelten Informationen muss der AAA Server 18 in der Lage sein, auf die in ihm abgespeicherten passenden Teilnehmerdaten zugreifen zu können.

In einem weiteren Schritt 23 antwortet der AAA Server 18 dem GGSN 6 mittels eines so genannten AAA Reply und übermittelt die folgenden Parameter oder Angaben: - eine IP Adresse, die als Heimadresse HoA der Mobilstation 9 im MIP dient (diese Adresse wird auch als PoA gemäß des WiMAX Standards bezeichnet), - eine Adresse HA@ des Heimagenten HA 11, und - weitere Daten, die erforderlich sind, um die Kommunikation zwischen dem PMIP client 15, der hier stellvertretend für die Signalisierung die Rolle der Mobilstation 9 übernimmt, und dem Heimagenten HA 11 mittels einer MSA zu schützen. Optional kann zusätzlich eine Adresse des ursprünglichen ASN-GW 14 übermittelt werden. Falls eine solche Adresse des ASN-GW 14 übermittelt und vom GGSN 6 empfangen wird, kann der GGSN 6 optional einen so genannten R4 Tunnel zu dem ASN-GW 14 aufbauen. Die hier beschriebenen Angaben sind, sofern zuvor eine "alte" Verbindung zu dem WiMAX Netzwerk 3 besteht, bereits aufgrund dieser "alten" Verbindung in dem AAA Server 18 abgespeichert. Sofern diese "alte" Verbindung nicht besteht, werden diese Angaben zunächst neu erzeugt und dann in dem AAA Server 18 abgespeichert.

In einem nächsten Schritt 24 triggert der GGSN 6 den PMIP client 15 mittels eines so genannten Start_PMIP Befehles. Dadurch wird die MIP Registrierung begonnen und die MIP spezifischen, insbesondere vom AAA Server 18 erhaltenen Angaben werden vom GGSN 6 an den PMIP client 15 weitergegeben. Der PMIP client 15 kann dann den Empfang dieser Angaben in einem Schritt 25 mittels einer Start_PMIP_ACK Nachricht an den GGSN 6 bestätigen.

In einem nachfolgenden Schritt 26 sendet der PMIP client 15 einen so genannten MIP Registration Request zu dem Heimagenten 11. Dabei werden die Adresse des Fremdagenten 12 als CoA Adresse und die HoA der Mobilstation 9 verwendet, die von dem GGSN 6 geliefert wurde. Vorteilhafterweise ist es möglich, die "alte" MIP Beziehung zwischen dem Heimagenten 11 und dem Fremdagenten 13 des WiMAX Netzwerkes 3 aufrecht zu erhalten. Dies kann beispielsweise mittels eines speziellen Flags in der Signalisierung des PMIP clients 15 erfolgen, das dazu gesetzt ist. In diesem Fall leitet der Heimagent Datenpakete zu beiden Fremdagenten, dem "neuen" Fremdagenten 12 und dem "alten" Fremdagenten 13. Dadurch kann ein noch weiter verbesserter nahtloser Übergang zwischen den beiden Netzwerken 2 und 3 mit einer unterbrechungsfreien Verbindung zu der Mobilstation 9 gewährleistet werden. Diese parallele Verbindung zu beiden Netzwerken 2 und 3 kann insbesondere für eine bestimmte, vorgebbare Zeitdauer, die geeignet gewählt werden kann, aufrechterhalten werden, bis sichergestellt ist, dass die "neue" Verbindung zu dem UMTS Netzwerk 2 sicher und stabil ihre Funktion erfüllt. Wenn die Mobilstation 9 die Verbindung zu dem WiMAX Netzwerk 3 abbricht, deregistriert der PMIP client 16 des WiMAX Netzwerkes 3 seine Bindungen. Dies resultiert dann darin, dass der MIP Weiterleitungstunnel abgebaut wird. Alternativ ist es möglich, dass der PMIP client 16 dann den MIP Weiterleitungstunnel abbaut, wenn er eine Nachricht erhält, dass die Mobilstation 9 das UMTS Netzwerk 2 benutzt, ohne die Verbindung zum WiMAX Netzwerk 3 abzubrechen. In diesem Fall kann der PMIP client 16 den MIP Weiterleitungstunnel auf einfache Weise erneut aufbauen, wenn der PMIP client 16 eine Nachricht erhält, dass die Mobilstation 9 erneut über das WiMAX Netzwerk 3 kommunizieren möchte. Dies vermeidet eine Verschwendung von Ressourcen durch ein Senden von Daten über zwei Verbindungen, wenn es auch ausreichend ist, die Daten nur über eine zu übertragen.

Falls die Mobilstation 9 zuvor noch nicht mit dem WiMAX Netzwerk 3 verbunden ist, kontaktiert der Heimagent 11 in einem nächsten Schritt 27 den AAA Server 18, um die MSA Daten und die Adresse HoA zu erfragen. Mit diesen Angaben kann dann die MSA zwischen dem PMIP client 15 und dem Heimagenten HA 11 aufgebaut werden. In einem nachfolgenden Schritt 28 werden die Daten von dem AAA Server 18 an den Heimagenten HA 11 übermittelt. Bei dieser Ausführungsvariante fordert der Heimagent HA 11 die Daten von dem AAA Server 18. Es ist auch möglich, dass der AAA Server 18 bereits nach dem Schritt 22 die erforderlichen Angaben an den Heimagenten 11 übermittelt. Die Schritte 27 und 28 sind hier nicht notwendig, sofern die Mobilstation 9 zuvor bereits mit dem WiMAX Netzwerk 3 verbunden ist. In diesem Fall sind die Angaben bereit dem Heimagenten HA 11 bekannt.

In einem Schritt 29 sendet der Heimagent HA 11 eine so genannte MIP Registration Reply, Reg_Reply, Nachricht an den PMIP client 15. Diese Übertragung der Nachricht erfolgt über den Fremdagenten 12. Anschließend antwortet der PMIP client 15 in einem Schritt 30 mit einer Reg_Complete Nachricht, um die erfolgreiche MIP Registrierung dem GGSN 6 mitzuteilen. In einem darauf folgenden Schritt 31 weist der GGSN 6 mit einer Activate PDP Context Reply Nachricht die erhaltene Adresse HoA der Mobilstation 9 zu und vervollständigt den Aufbau des PDP context.

Die Mobilstation 9 kann nun beginnen, Datenpakete über den GGSN 6 des UMTS Netzwerkes 2 zu senden und zu empfangen. Beim Empfangen von Nutzdaten für die Mobilstation 9 werden diese von dem Fremdagenten 12 an die Mobilstation 9 weitergeleitet, während die Signalisierung, wie oben beschrieben, über den PMIP client 15 abgewickelt wird. Falls zuvor ein R4 Tunnel zu dem "alten" ASN-GW 14 aufgebaut wurde, so kann dieser abgebaut werden, wenn der GGSN 6 das Empfangen von Daten von dem Heimagenten 11 für die Mobilstation 9 erkennt.

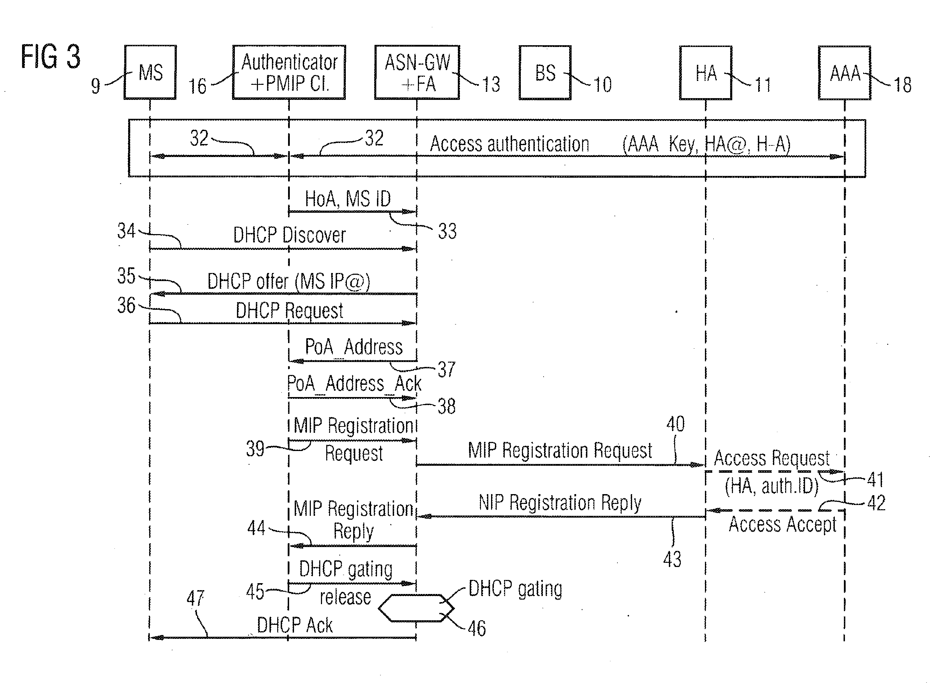

Die Fig. 3 zeigt ein zweites Ablaufschema, in dem der zeitliche Signalisierungsablauf bei einem Aufbau einer Verbindung der Mobilstation 9 in das WiMAX Netzwerk 3 des Telekommunikationssystemes 1 nach Fig. 1 dargestellt ist. Bei diesem Ablaufschema erfolgt ein Wechsel aus dem UMTS Netzwerk 2 heraus zu dem WiMAX Netzwerk 3. Die WiMAX Prozeduren bleiben im wesentlichen gegenüber dem WiMAX Standard unverändert. Hier sind allerdings MIP Teilnehmerdaten der Mobilstation 9 in dem AAA Server 18 abgespeichert, die bei dem vorhergehenden Aufbau der "alten" Verbindung in das UMTS Netzwerk 2 erzeugt wurden. Diese Teilnehmerdaten können von dem AAA Server für die Signalisierung beim Wechsel zu dem WiMAX Netzwerk 3 zur Verfügung gestellt werden. In dem Fall, in dem die Mobilstation 9 erstmals eine Verbindung zu dem WiMAX Netzwerk 3 aufbaut, ohne dass zuvor bereits eine Verbindung zu dem UMTS Netzwerk 2 besteht, werden mittels des AAA Servers 18 neue MIP Teilnehmerdaten erzeugt, wie dies in den herkömmlichen WiMAX Prozeduren festgelegt ist, und diese MIP Teilnehmerdaten dann in dem AAA Server abgespeichert, um bei einem nachfolgenden Wechsel des Netzwerkes abgerufen werden zu können.

Zunächst wird in einem Schritt 32 eine Zugriffsauthentifizierung für die Mobilstation 9 auf das WiMAX Netzwerk 3 mittels des AAA Servers 18 abgewickelt. Dabei werden die MSA Daten und andere MIP Daten von dem AAA Server 18 zu einem so genannten Authenticator übertragen. Dieser Authenticator befindet sich in dem ASN 7. Mittels des Authenticators kann vor allem festgelegt werden, ob die Mobilstation 9 das WiMAX Netzwerk 3 benutzen darf, oder nicht. Insbesondere ist der PMIP client 16 auf dem Authenticator angeordnet. In der Fig. 3 sind der Authenticator und der PMIP client 16 zu einer gemeinsamen Komponente zusammengefasst. In dem Schritt 32 werden somit insbesondere ein AAA Schlüssel für ein Erzeugen des Message Authentication Codes, MAC, die Adresse HA@ und die IP Adresse HoA der Mobilstation 9 zum Authenticator übermittelt. In einem nachfolgenden Schritt 33 werden dann insbesondere eine ID der Mobilstation 9 und die IP Adresse, HoA oder PoA, der Mobilstation 9 an das ASN-GW 14 weitergeleitet. Das ASN-GW 14 und der Fremdagent 13 erfüllen unterschiedliche Funktionen sind aber einfachheitshalber in der Fig. 3 zu einer gemeinsamen Komponente zusammengefasst.

In Schritten 34, 35 und 36 fordert die Mobilstation 9 beim ASN-GW 14 ihre IP Adresse an. Das ASN GW 14 spielt in diesem Fall die Rolle eines so genannten Dynamic Host Configuration Protocol, DHCP, Servers. Der Ablauf entspricht den herkömmlichen WiMAX Prozeduren über eine DHCP Discover Nachricht von der Mobilstation 9 zu dem ASN-GW 14 im Schritt 34, eine darauffolgende DHCP offer Nachricht von dem ASN-GW 14 zu der Mobilstation 9 im Schritt 35 und einer DHCP Request Nachricht von der Mobilstation 9 zu dem ASN-GW 14 in dem Schritt 36.

In einem Schritt 37 wird die zuvor bereits an den Authenticator übertragene IP Adresse der Mobilstation 9 mittels einer PoA_Address Nachricht von dem ASN-GW 14 an den PMIP client 16 übertragen. Der Empfang der IP Adresse HoA oder PoA wird von dem PMIP client 16 mit einer PoA_Address_Ack Nachricht in einem Schritt 38 quittiert.

Der Empfang der PoA_Address Nachricht seitens des PMIP client 16 veranlasst ebenfalls die MIP Prozedur. Diese wird in nachfolgenden Schritten 39-44 durchgeführt. In dem Schritt 39 wird die MIP Registrierungsprozedur mittels einer MIP Registration Request Nachricht begonnen. Die Schritte 39-44 entsprechen weitgehend den Schritten 26-29, die im Zusammenhang mit Fig. 2 beschrieben wurden. Allerdings sind hier der "alte" Fremdagent der Fremdagent 12 und der "neue" Fremdagent der Fremdagent 13. Die "alte" MIP Beziehung ist dementsprechend die Beziehung zwischen dem Heimagenten 11 und dem Fremdagenten 12 des UMTS Netzwerkes 2 und die "neue" MIP Beziehung diejenige zwischen dem Heimagenten 11 und dem Fremdagenten 13 des WiMAX Netzwerkes 3. Auf eine weitergehende Wiederholung dieses Sachverhaltes wird hier verzichtet.

Durch die vorhergehenden Schritte, insbesondere für die MIP Registrierungsprozedur, wurde die Freigabe der IP Adresse HoA, PoA der Mobilstation 9 an die Mobilstation 9 verzögert. In Schritten 45 und 46 wird nun mittels DHCP gating release und DHCP gating Nachrichten die Freigabe der IP Adresse HoA, PoA veranlasst. In einem Schritt 47 sendet das ASN-GW 14 eine DHCP Ack Nachricht an die Mobilstation 9, so dass diese dann mit dem Übertragen von Datenpaketen beginnen kann.

Im Verlauf der Ablaufprozedur nach Fig. 3 ist es auch möglich, die Adresse des Fremdagenten 12 als "altem ASN-GW" zu erhalten. Dadurch wird angezeigt, dass die Mobilstation 9 momentan im UMTS Netzwerk 2 registriert ist. Dadurch kann der "neue" ASN-GW 7 einen so genannten R4 Tunnel zu dem GGSN 6 aufbauen, um einen Datenverlust während des Wechsels des Netzwerkes zu verhindern. Dieser R4 Weiterleitungstunnel kann dann wieder abgebaut werden, sobald er nicht mehr benötigt wird.

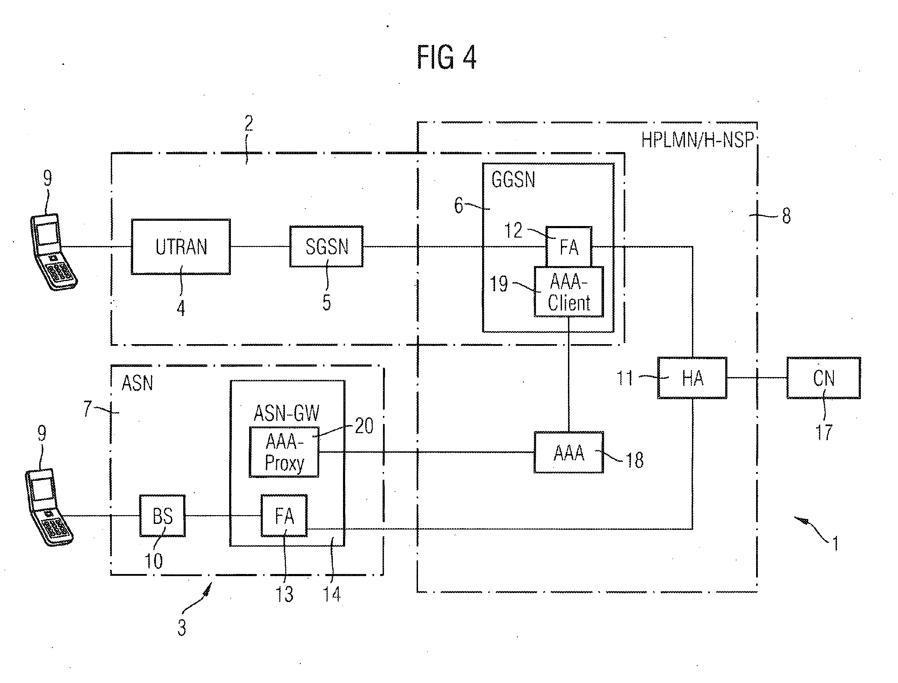

Die Fig. 4 zeigt ein zweites Ausführungsbeispiel des erfindungsgemäßen Telekommunikationssystemes 1 mit dem UMTS Netzwerk 2 und dem WiMAX Netzwerk 3. Im Gegensatz zu dem ersten Ausführungsbeispiel nach Fig. 1 enthalten die beiden Netzwerke 2 und 3 hier keine PMIP clients, die als Stellvertreter für die Mobilstation 9 die Signalisierung für den Wechsel des Netzwerkes durchführen. Im vorliegenden Ausführungsbeispiel ist die Funktionalität zum Durchführen des Mobilitätsprotokolls Mobile IP, MIP, direkt in die Mobilstation 9 verlagert. Diese weist dazu einen MIP client auf. Das Telekommunikationssystem 1 gemäß der Fig. 4 weist daher bis auf die beiden PMIP clients 12 und 13 die gleichen Komponenten auf, wie das Telekommunikationssystem 1 gemäß der Fig. 1.

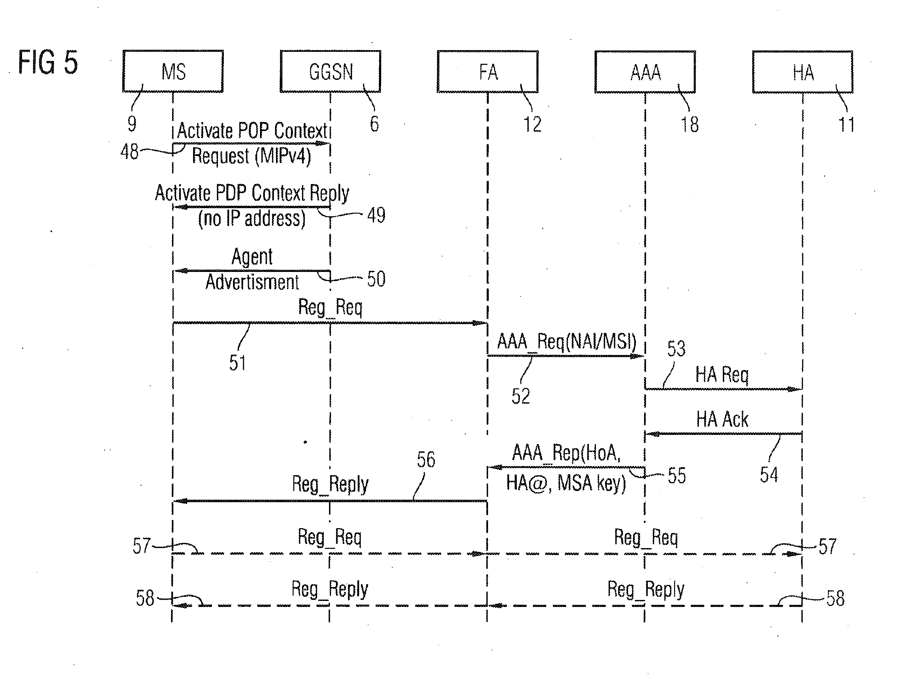

Im Folgenden wird nun anhand der Fig. 5 ein Ablauf beschrieben, bei dem die Mobilstation 9 eine Verbindung zu dem UMTS Netzwerk 2 aufbaut. Dies kann sowohl durch einen Wechsel von dem WiMAX Netzwerk 3 zu dem UMTS Netzwerk 2 als auch aus der Situation heraus erfolgen, in der die Mobilstation 9 zuvor noch nicht mit dem WiMAX Netzwerk 3 in Verbindung stand. In einem Schritt 48 baut die Mobilstation 9 einen so genannten PDP Context mit dem UMTS Netzwerk 2 auf. Dazu wird von der Mobilstation 9 eine Activate FDP Context Request Nachricht an den GGSN 6 übermittelt. Falls die Mobilstation 9 hier bereits weiss, dass sie später eventuell (wieder) zu dem WiMAX Netzwerk 3 wechselt, ist es vorteilhaft einen APN zu verwenden, der MIP und den Wechsel zum WiMAX Netzwerk 3 unterstützt. In einem Schritt 49 wird dann von dem GGSN 6 eine Activate PDP Context Reply Nachricht an die Mobilstation 9 übertragen. Der PDP Context wird dadurch aufgebaut, wobei der Mobilstation 9 hier keine IP Adresse zugewiesen wird. Dies erfolgt zu einem späteren Zeitpunkt, während der MIP Registrierungsprozedur. Dies ist eine herkömmliche Vorgehensweise, wie sie beispielsweise in den Spezifikationen 3GPP TS 29.061: "3rd Generation Partnership Project; Technical Specification Group Core Network and Terminals; Interworking between the Public Land Mobile Network (PLMN) supporting packet based services and Packet Data Networks (PDN); Release 6", und 3GPP TS 29.060: "3rd Generation Partnership Project; Technical Specification Group Services and System Aspects; General Packet Radio Service (GPRS); Service description; Stage 2; Release 6", beschrieben sind. In einem nächsten Schritt 50 beginnt der Fremdagent 12 so genannte Agent Advertisements zu der Mobilstation 9 zu senden. Dadurch erhält die Mobilstation 9 eine CoA und beginnt die MIP Registrierungsprozedur.

In nachfolgenden Schritten 51-56 wird eine MIP Registrierungsprozedur für den Fall durchgeführt, dass die Mobilstation 9 zuvor nicht mit dem WiMAX Netzwerk 3 in Verbindung stand. Dann liegen der Mobilstation 9 wahrscheinlich keine Angaben, insbesondere MSA Daten und andere MIP Daten, wie die Adressen HA@ und HoA, zum Durchführen der MIP Registrierung vor. Die vorgesehene AAA Infrastruktur, insbesondere der AAA Server 18, kann daher zum Erzeugen dieser Angaben genutzt werden. Nach dem Empfang der Reg_Reply Nachricht im Schritt 56 durch die Mobilstation 9 liegen ihr alle notwendigen Angaben vor, so dass sie mit dem Senden und Empfangen von Daten beginnen kann.

In dem Fall, in dem die Mobilstation 9 zuvor bereits mit dem WiMAX Netzwerk 3 in Verbindung steht, und somit ein Wechsel vom WiMAX Netzwerk 3 zu dem UMTS Netzwerk 2 durchgeführt wird, werden die Schritte 51-56 nicht durchgeführt. Stattdessen erfolgen nach dem Schritt 50 ein Schritt 57, in dem eine Reg_Req Nachricht von der Mobilstation 9 über den Fremdagenten 12 zu dem Heimagenten 11 übermittelt wird, um die MIP Registrierungsprozedur durchzuführen. Anschließend wird von dem Heimagenten 11 über den Fremdagenten 12 zu der Mobilstation 9 eine Reg_Reply Nachricht gesandt, nach deren Empfang die Mobilstation 9 dann mit dem Senden und Empfangen von Daten beginnen kann. In diesem Fall ist es nicht notwendig, die AAA Infrastruktur an der MIP Prozedur zu beteiligen, da die Mobilstation durch ihre Verbindung zu dem WiMAX Netzwerk 3 bereits alle für die Durchführung des Wechsels notwendigen MIP Angaben enthält.

In demjenigen Fall, in dem die Mobilstation 9 eine Verbindung zu dem WiMAX Netzwerk 3 aufbauen möchte, erfolgt diese Prozedur zum Aufbauen dieser Verbindung im wesentlichen nach dem bereits oben, im Zusammenhang mit der Fig. 3 beschriebenen Ablauf. Allerdings tritt hier an Stelle des PMIP client 13 direkt die Mobilstation 9 auf. Zunächst führt die Mobilstation 9 eine WiMAX Zugangsauthentifizierung aus. Falls die Mobilstation 9 zuvor noch nicht mit dem UMTS Netzwerk 2 verbunden ist, sendet der AAA Server 18 neue MIP Angaben, wie MSA Daten, die Adressen HA@ und HoA, zur Mobilstation 9. Falls die Mobilstation 9 zuvor bereits mit dem UMTS Netzwerk 2 verbunden ist, stellt der AAA Server 18 dies fest und unterlässt das Senden der MIP Angaben zu der Mobilstation 9, da sie dort bereits vorhanden sind. Alternativ kann der AAA Server 18 die MIP Daten allerdings einfachheitshalber dennoch übermitteln. Die Mobilstation 9 kann dann eine normale MIP Registrierungsprozedur durchführen.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

## Patentansprüche

1. Telekommunikationssystem (1) mit
einem ersten Netzwerk (2), das ein zellulares Mobilfunknetzwerk ist,
einem zweiten Netzwerk (3), das ein sogenanntes WiMAX, Worldwide Interoperability for Microwave Access, Funknetzwerk ist, und
einem sogenannten AAA, Authentication, Authorization and Accounting, -Server (18) zum Abspeichern von Teilnehmerdaten eines Teilnehmerendgerätes (9), das sowohl zum Benutzen des ersten Netzwerkes (2) als auch des zweiten Netzwerkes (3) ausgestaltet ist, wobei der AAA-Server (18) so in dem Telekommunikationssystem (1) angeordnet ist, dass sowohl seitens des ersten Netzwerkes (2) als auch seitens des zweiten Netzwerkes (3) auf in dem AAA-Server (18) abgespeicherte Teilnehmerdaten des Teilnehmerendgerätes (9) zugreifbar ist, und wobei
für einen Wechsel des Teilnehmerendgerätes (9) zwischen dem ersten Netzwerk (2) und dem zweiten Netzwerk (3) ein Mobilitätsprotokoll implementiert ist,
**dadurch gekennzeichnet,**
**dass** ein in dem Mobilitätsprotokoll definierter Proxy Mobil-Client (15) in dem ersten Netzwerk (2) implementiert ist, der als Stellvertreter für das Teilnehmerendgerät (9) zum Ausführen eines Signalisierens beim Durchführen des Wechsels des Teilnehmerendgerätes (9) zwischen den Netzwerken (2, 3) und zur Kommunikation mit dem AAA- Server ausgestaltet ist.

2. Telekommunikationssystem nach Anspruch 1,
**dadurch gekennzeichnet,**
**dass** das Telekommunikationssystem (1) so ausgestaltet ist, dass es bei einem Aufbau einer Verbindung zwischen dem Teilnehmerendgerät (9) und dem ersten Netzwerk (2) oder dem zweiten Netzwerk (3) überprüft, ob das Teilnehmerendgerät (9) bereits mit dem jeweils anderen Netzwerk (2, 3) verbunden ist, und, falls dies der Fall ist, die Teilnehmerdaten des Teilnehmerendgerätes (9) aus dem AAA-Server (18) abruft.

3. Telekommunikationssystem nach Anspruch 2,
**dadurch gekennzeichnet,**
**dass** das Telekommunikationssystem (1) so ausgestaltet ist, dass es, falls das Teilnehmerendgerät (9) nicht bereits mit dem jeweils anderen Netzwerk (2, 3) verbunden ist, beim Aufbau der Verbindung erzeugte Teilnehmerdaten in dem AAA-Server (18) abspeichert.

4. Telekommunikationssystem nach wenigstens einem der vorhergehenden Ansprüche,
**dadurch gekennzeichnet,**
**dass** in dem Mobilitätsprotokoll ein Mobil-Client für das Teilnehmerendgerät (9) definiert ist, der zum Signalisieren mittels des Teilnehmerendgerätes (9) beim Durchführen des Wechsels des Teilnehmerendgerätes (9) zwischen den Netzwerken (2, 3) ausgestaltet ist.

5. Telekommunikationssystem nach wenigstens einem der vorhergehenden Ansprüche,
**dadurch gekennzeichnet,**
**dass** in dem Mobilitätsprotokoll ein sogenannter Heimagent, HA, (11) für ein dem Teilnehmerendgerät (9) zugeordnetes Heimnetzwerk (8) und ein sogenannter Fremdagent, FA, (12, 13) für ein von dem Teilnehmerendgerät (9) benutzbares Fremdnetzwerk (2, 3), das nicht sein Heimnetzwerk (8) ist, definiert sind, wobei der Fremdagent, FA, (12, 13) so ausgestaltet ist, dass er von dem Heimnetzwerk (8) des Teilnehmerendgerätes (9) kommende, an das Teilnehmerendgerät (9) gerichtete Signalisierungs- und Nutzdaten empfängt.

6. Telekommunikationssystem nach Anspruch 5,
**dadurch gekennzeichnet,**
**dass** in dem ersten Netzwerk (2) ein solcher Fremdagent, FA, (12) vorhanden ist, der so ausgestaltet ist, dass er mobiliätsprotokollspezifische Signalisierungsdaten zwischen dem Proxy Mobil-Client (15) und dem Heimagenten (11) weiterleitet, während er eigentliche Teilnehmer-Nutzdaten zwischen dem Teilnehmerendgerät (9) und dem Heimagenten (11) weiterleitet.

7. Telekommunikationssystem nach Anspruch 5 oder 6,
**dadurch gekennzeichnet,**
**dass** die in dem AAA-Server (18) abspeicherbaren Teilnehmerdaten wenigstens eine, insbesondere alle, der folgenden Angaben enthält:
- Angaben, die für eine sogenannte Mobile Security Association, MSA, für einen Schutz einer Übertragung von mobilitätsprotokollspezifischen Signalisierungsdaten zwischen dem Teilnehmerendgerät (9) und dem Heimagenten (11) benötigt werden, wie z. B. ein gemeinsamer Geheimschlüssel zum Erzeugen eines sogenannten Message Authentication Codes, MAC, eine Angabe eines Algorithmus' zum Erzeugen des Message Authentication Codes, MAC, ein Wiedergabeschutz, etc.,
- eine Adresse des Heimagenten (11) des Teilnehmerendgerätes (9) und
- eine Heimadresse des Teilnehmerendgerätes (9) in seinem Heimnetzwerk (8).

8. Telekommunikationssystem nach wenigstens einem der vorstehenden Ansprüche,
**dadurch gekennzeichnet,**
**dass** das Telekommunikationssystem (1) so ausgestaltet ist, dass es bei einem Wechsel des Teilnehmerendgerätes (9) zwischen dem ersten Netzwerk (2) und dem zweiten Netzwerk (3) eine vor dem Wechsel bestehende Verbindung des Teilnehmerendgerätes (9) zu einem der beiden Netzwerke (2, 3), insbesondere für eine vorgebbare Dauer, aufrechterhält, nachdem die neue Verbindung des Teilnehmerendgerätes (9) zu dem anderen der beiden Netzwerke (2, 3) aufgebaut wurde.

9. Telekommunikationssystem nach wenigstens einem der vorstehenden Ansprüche,
**dadurch gekennzeichnet,**
**dass** das erste Netzwerk (2) ein Netzwerk nach dem sogenannten Universal Mobile Telecommunications System, UMTS, Standard ist.

10. Verfahren zum Steuern eines Wechsels eines Teilnehmerendgerätes (9) zwischen einem ersten Netzwerk (2), das ein zellulares Mobilfunknetzwerk ist, und
einem zweiten Netzwerk (3), das ein sogenanntes WiMAX, Worldwide Interoperability for Microwave Access, Funknetzwerk ist, wobei
Teilnehmerdaten des Teilnehmerendgerätes (9), dem sowohl ein Zugang zu dem ersten Netzwerk (2) als auch zu dem zweiten Netzwerk (3) möglich ist, in einem sogenannten AAA, Authentication, Authorization and Accounting, -Server (18) abgespeichert werden und sowohl seitens des ersten Netzwerkes (2) als auch seitens des zweiten Netzwerkes (3) auf in dem AAA-Server (18) abgespeicherte Teilnehmerdaten des Teilnehmerendgerätes (9) zugegriffen wird, und
ein Wechsel des Teilnehmerendgerätes (9) zwischen dem ersten Netzwerk (2) und dem zweiten Netzwerk (3) mittels eines Mobilitätsprotokolls durchgeführt wird,
**dadurch gekennzeichnet,**
**dass** ein in dem Mobilitätsprotokoll definierter Proxy Mobil-Client (15) in dem ersten Netzwerk (2) implementiert ist, der beim Durchführen des Wechsels des Teilnehmerendgerätes (9) zwischen den Netzwerken (2, 3) als Stellvertreter für das Teilnehmerendgerät (9) zum Ausführen eines Signalisierens und zur Kommunikation mit dem AAA- Server dient.

## Claims

1. Telecommunication system (1) with
a first network (2) which is a cellular mobile radio network, a second network (3), which is a so-called WiMAX, Worldwide Interoperability for Microwave Access, radio network, and
a so-called AAA, Authentication, Authorization and Accounting server (18) for storing user data of a user terminal (9), which is equipped to use both the first network (2) and also the second network (3), with the AAA server (18) being arranged in the telecommunication system (1) so that user data of the user terminal (9) stored in the AAA server (18) is accessible both by the first network (2) and also by the second network (3), and whereby,
when a switch is made of the user terminal (9) between the first network (2) and the second network (3) a mobility protocol is implemented,
**characterised in that**
a proxy mobile client (15) defined in the mobility protocol is implemented in the first network (2) which is embodied as a proxy for the user terminal (9) for executing signalling when switching the user terminal (9) between the networks (2, 3) and is designed for communication with the AAA server.

2. Telecommunication system according to claim 1,
**characterised in that**
the telecommunication system (1) is embodied so that, when a connection is established between the user terminal (9) and the first network (2) or the second network (3), a check is made as to whether the user terminal (9) is already connected to the respective other network (2, 3) and, if it is, the user data of the user terminal (9) is retrieved from the AAA server (18).

3. Telecommunication system according to claim 2,
**characterised in that**
the telecommunication system (1) is embodied so that, if the user terminal (9) is not already connected to the other respective network (2, 3), user data created when the connection is established is stored in the AAA server (18).

4. Telecommunication system according to at least one of the preceding claims,
**characterised in that**
a mobile client for the user terminal (9) is defined in the mobility protocol, which is equipped for signalling by means of the user terminal (9) on execution of the switchover of the user terminal (9) between the networks (2, 3).

5. Telecommunication system according to one of the preceding claims,
**characterised in that**
a so-called home agent, HA, (11) for a home network (8) assigned to the user terminal (9) and a so-called foreign agent, FA, (12, 13) for a foreign network (2, 3) able to be used by the user terminal (9) which is not its home network (8) are defined in the mobility protocol, with the foreign agent FA, (12, 13) being embodied so that it receives signalling and payload data coming from the home network (8) of the user terminal (9) directed to the user terminal (9).

6. Telecommunication system according to claim 5,
**characterised in that**
such a foreign agent, FA, (12) is present in the first network (2) which is embodied so that it forwards mobility-protocolspecific signalling data between the proxy mobile client (15) and the home agent (11), whereas it forwards actual user payload data between the user terminal (9) and the home agent (11).

7. Telecommunication system according to claim 5 or 6,
**characterised in that**
**that** the user data in the AAA server (18) contains at least one, especially all, of the following information:
- information needed for a so-called Mobile Security association, MSA, for protecting a transmission of mobilityprotocol-specific signalling data between the user terminal (9) and the home agent (11), such as e.g. a common privacy key to create a so-called Message Authentication Code, MAC, information about an algorithm to create the Message Authentication Code MAC, a copy protection, etc.,
- an address of the home agent (11) of the user terminal (9) and
- a home address of the user terminal (9) in its home network (8).

8. Telecommunication system according to at least one of the preceding claims,
**characterised in that**
the telecommunication system (1) is embodied so that, when a switch is made of the user terminal (9) between the first network (2) and the second network (3), a connection of the user terminal (9) to one of the two networks (2, 3) which existed before the switch is maintained, especially for a predeterminable duration, after the new connection of the user terminal (9) to the other of the two networks (2, 3) has been established.

9. Telecommunication system according to at least one of the preceding claims,
**characterised in that**
the first network (2) is a network in accordance with the so-called Universal Mobile Telecommunications System, UMTS, standard.

10. A method for controlling switching of a user terminal (9) between a first network (2), which is a cellular mobile radio network, and
a second network (3), which is a so-called WiMAX, Worldwide Interoperability for Microwave Access, radio network, with user data of the user terminal (9), for which access to both the first network (2) and also to the second network (3) is possible, being stored in a so-called AAA, Authentication, Authorization and Accounting, server (18) and there being access both by the first network (2) and also by the second network (3) to user data of the user terminal (9) stored in the AAA server (18) and
a switch of the user terminal (9) between the first network (2) and the second network (3) being made by means of a mobility protocol,
**characterised in that**
a proxy mobile client (15) defined in the mobility protocol is implemented in the first network (2) which is embodied as a proxy for the user terminal (9) for executing signalling when switching the user terminal (9) between the networks (2, 3) and is designed for communication with the AAA server.

## Revendications

1. Système de télécommunication (1) avec un premier réseau (2) qui est un réseau radio mobile cellulaire, un deuxième réseau (3) qui est un réseau radio dit WiMAX, Worldwide Interoperability for Microwave Access, et un serveur dit AAA, Authentication, Authorization and Accounting, (18) pour sauvegarder des données d'usager d'un terminal d'usager (9) qui est réalisé pour utiliser tant le premier réseau (2) que le deuxième réseau (3), le serveur AAA (18) étant disposé de manière telle dans le système de télécommunication (1) qu'il est possible, tant du côté du premier réseau (2) que du côté du deuxième réseau (3), d'accéder à des données d'usager du terminal d'usager (9) sauvegardées sur le serveur AAA (18), et un protocole de mobilité étant implémenté pour un passage du terminal d'usager (9) entre le premier réseau (2) et le deuxième réseau (3), **caractérisé en ce qu'**est implémenté, dans le premier réseau (2), un Proxy Mobile Client (15) défini dans le protocole de mobilité et qui est réalisé, en tant que remplaçant du terminal d'usager (9), pour exécuter une signalisation lors de l'exécution du passage du terminal d'usager (9) entre les réseaux (2, 3) et pour communiquer avec le serveur AAA.

2. Système de télécommunication selon la revendication 1, **caractérisé en ce que** le système de télécommunication (1) est réalisé de manière telle que, à l'établissement d'une liaison entre le terminal d'usager (9) et le premier réseau (2) ou le deuxième réseau (3), il vérifie si le terminal d'usager (9) est déjà relié à l'autre réseau respectif (2, 3) et, si tel est le cas, appelle les données d'usager du terminal d'usager (9) du serveur AAA (18).

3. Système de télécommunication selon la revendication 2, **caractérisé en ce que** le système de télécommunication (1) est réalisé de manière telle qu'il sauvegarde dans le serveur AAA (18), si le terminal d'usager (9) n'est pas déjà relié à l'autre réseau respectif (2, 3), des données d'usager générées lors de l'établissement de la liaison.

4. Système de télécommunication selon au moins l'une des revendications précédentes, **caractérisé en ce qu'**est défini, dans le protocole de mobilité, un client mobile pour le terminal d'usager (9), lequel client est réalisé pour la signalisation au moyen du terminal d'usager (9) lors de l'exécution du passage du terminal d'usager (9) entre les réseaux (2, 3).

5. Système de télécommunication selon au moins l'une des revendications précédentes, **caractérisé en ce que** sont définis, dans le protocole de mobilité, ce qu'on appelle un agent nominal, HA, (11) pour un réseau nominal (8) associé au terminal d'usager (9) et ce qu'on appelle un agent étranger, FA, (12, 13) pour un réseau étranger (2, 3) utilisable par le terminal d'usager (9) et qui n'est pas son réseau nominal (8), l'agent étranger, FA, (12, 13) étant réalisé de manière à recevoir des données de signalisation et utiles venant du réseau nominal (8) du terminal d'usager (9) et adressées au terminal d'usager (9).

6. Système de télécommunication selon la revendication 5, **caractérisé par** la présence, dans le premier réseau (2), d'un agent étranger, FA, (12) qui est réalisé de manière telle qu'il retransmet des données de signalisation spécifiques au protocole de mobilité entre le Proxy Mobile Client (15) et l'agent nominal (11) pendant qu'il retransmet des données utiles d'usager à proprement parler entre le terminal d'usager (9) et l'agent nominal (11).

7. Système de télécommunication selon la revendication 5 ou 6, **caractérisé en ce que** les données d'usager pouvant être sauvegardées dans le serveur AAA (18) contiennent au moins l'une des informations suivantes, et plus particulièrement toutes les informations suivantes :
- informations requises pour ce qu'il est convenu d'appeler une Mobile Security Association, MSA, pour une protection d'une transmission de données de signalisation spécifiques au protocole de mobilité entre le terminal d'usager (9) et l'agent nominal (11), telles que, par exemple, une clé secrète commune pour générer ce qu'on appelle un Message Authentication Code, MAC, une mention d'un algorithme pour générer le Message Authentication Code, MAC, une protection contre la reproduction, etc. ;
- une adresse de l'agent nominal (11) du terminal d'usager (9) ; et
- une adresse nominale du terminal d'usager (9) dans son réseau nominal (8).

8. Système de télécommunication selon au moins l'une des revendications précédentes, **caractérisé en ce que** le système de télécommunication (1) est réalisé de manière telle que, lors d'un passage du terminal d'usager (9) entre le premier réseau (2) et le deuxième réseau (3), il maintient une liaison du terminal d'usager (9), qui existait avant le passage, vers l'un des deux réseaux (2, 3), et ce, plus particulièrement pour une durée prédéterminable, après que la nouvelle liaison du terminal d'usager (9) a été établie vers l'autre des deux réseaux (2, 3).

9. Système de télécommunication selon au moins l'une des revendications précédentes, **caractérisé en ce que** le premier réseau (2) est un réseau selon la norme appelée Universal Mobile Telecommunications System, UMTS.

10. Procédé pour commander un passage d'un terminal d'usager (9) entre un premier réseau (2) qui est un réseau radio mobile cellulaire et un deuxième réseau (3) qui est un réseau radio dit WiMAX, Worldwide Interoperability for Microwave Access, des données d'usager du terminal d'usager (9) qui peut accéder tant au premier réseau (2) qu'au deuxième réseau (3) étant sauvegardées sur un serveur dit AAA, Authentication, Authorization and Accounting, (18), et des données d'usager du terminal d'usager (9) sauvegardées sur le serveur AAA (18) étant accédées tant du côté du premier réseau (2) que du côté du deuxième réseau (3), et un passage du terminal d'usager (9) entre le premier réseau (2) et le deuxième réseau (3) étant exécuté au moyen d'un protocole de mobilité, **caractérisé en ce qu'**est implémenté, dans le premier réseau (2), un Proxy Mobile Client (15) défini dans le protocole de mobilité et qui, lors de l'exécution du passage du terminal d'usager (9) entre les réseaux (2, 3), sert, en tant que remplaçant du terminal d'usager (9), à exécuter une signalisation et à communiquer avec le serveur AAA.
